# EUROPEAN PATENT SPECIFICATION

(11) **EP 3 736 151 B1**
(45) Date of publication and mention of the grant of the patent: **08.06.2022**
(21) Application number: 19751491.2
(22) Date of filing: 22.01.2019
(51) Int. Cl.: B60K 17/342, B60K 17/344, B60K 17/354, B60K 17/356, B60K 17/36, B60K 6/20, B60K 6/442, B60K 6/52, B60L 50/61, B60W 10/02, B60W 10/06, B60W 10/08, B60W 10/26, B60W 10/30, B60W 20/10, B60W 20/13, B60W 20/20, B60W 20/40, B60W 30/188, B60K 6/448, B60K 1/02

(54) **HYBRID DRIVE SYSTEM AND VEHICLE**
HYBRIDANTRIEBSSYSTEM UND FAHRZEUG
SYSTÈME D'ENTRAÎNEMENT HYBRIDE ET VÉHICULE

(30) Priority: 09.02.2018 CN 201810136024
(43) Date of publication of application: 11.11.2020
(73) Proprietor: Zhejiang Geely Holding Group Co., Ltd., Zhejiang 310051 (CN); Zhejiang Geely New Energy Commercial Vehicles Co., Ltd., Hangzhou, Zhejiang 310051 (CN)
(72) Inventor: LI, Shufu, Hangzhou, Zhejiang 310051 (CN); CAI, Wenyuan, Hangzhou, Zhejiang 310051 (CN); SONG, Guanghui, Hangzhou, Zhejiang 310051 (CN); LV, Jinshan, Hangzhou, Zhejiang 310051 (CN); CUI, Junbo, Hangzhou, Zhejiang 310051 (CN)
(74) Representative: Ziebig & Hengelhaupt Patent- und Rechtsanwaltskanzlei PartG mbB
(86) International application number: PCT/CN2019/072732
(87) International publication number: WO 2019/154077

(56) References cited:
- EP-A1- 2 505 409
- CN-A- 102 862 469
- CN-A- 105 416 033
- CN-A- 105 835 683
- CN-A- 106 427 521
- CN-A- 108 327 512
- DE-A1-102006 021 156
- DE-A1-102012 218 599
- US-A- 3 865 207
- US-A1- 2004 069 548
- US-B2- 7 520 354
- US-B2- 8 172 720

## Description

### Technical Field

The invention relates to the technical field of vehicles, and in particular, to a hybrid power drive system and a vehicle.

### Background Art

Energy dilemma and global warming are increasingly serious, so how to realize energy conservation and emission reduction of automobiles has become an urgent task for the global automobile industry. In comparison with the traditional automobile industry, new energy vehicles represented by hybrid power automobiles, new energy automobiles and fuel cell automobiles have obvious advantages in terms of total energy conversion efficiency and total emissions, and thus they are considered as an important development direction of automobiles in the future.

At present, the new energy automobiles mainly include pure electric automobiles and hybrid power automobiles. Hybrid power is an important transitional technology for developing the new energy automobiles, has the advantages of making full use of the respective advantages of electric drive and traditional engine drive, can solve the problems of the pure electric automobiles in terms of power performance and driving range, and has good industrial prospects, so that many large companies are racing to develop and launch hybrid power electric automobile products.

For the current automobiles, such as commercial vehicles, hybrid power systems are mainly of extended-range, the extended-range power systems have an obvious energy saving efficacy for the commercial vehicles mainly driving under urban operating conditions, but has no obvious energy saving efficacy for road commercial vehicles often driving under suburban operating conditions and highway operating conditions. In view of the effects of the commercial vehicle energy consumption limits and emission regulations in the future, and in order to cover the operating conditions of various types of the commercial vehicles and the road commercial vehicles, it is urgent to develop a hybrid power drive system to solve the problems above.

In EP 2 505 409 A1, US 2004/069548 A1, DE 10 2006 021156 A1 and US 7 520 354 B2 hybrid electro-thermal power trains for propelling a vehicle are disclosed.

The hybrid power train is of a combined series-parallel type.

### Summary of the Invention

An object of the invention and a first aspect of the invention is to provide a hybrid power drive system, including a power battery device, a range extender system, and a motor drive system. The power battery device is configured to supply power to the motor drive system. The range extender system includes an engine and a generator. The generator is able to generate power under the driving of the engine to supply the power to the motor drive system and/or charge the power battery device. The hybrid power drive system further includes:
a vehicle control unit configured to control the engine and/or the generator of the range extender system to generate a driving force.

The range extender system is mechanically connected to a main coupling mechanism to transmit the generated driving force to a main drive axle of a vehicle by means of the main coupling mechanism, so as to drive wheels on both sides of the axle to rotate.

Still according to the first aspect of the invention, the vehicle further includes one or more auxiliary drive axles. The motor drive system includes a motor drive subsystem corresponding to at least one of the main drive axle and the auxiliary drive axles, and the motor drive subsystem is configured to transmit the generated driving force to the corresponding drive axle.

According to the invention, the motor drive system includes a motor drive subsystem corresponding to the auxiliary drive axle, the motor drive subsystem corresponding to the auxiliary drive axle includes two sub-drive motors, and the two sub-drive motors transmit the driving force to the auxiliary drive axle via a coupling mechanism
to drive wheels on both sides of the axle to rotate; and
the motor drive system further includes a motor drive subsystem corresponding to the main drive axle, the motor drive subsystem corresponding to the main drive axle includes a main drive motor, and the main drive motor is mechanically connected to the main coupling mechanism to transmit the generated driving force to the main drive axle of the vehicle through the main coupling mechanism, wherein the main drive motor and the generator are two separate components.

The following teachings are disclosed as part of embodiments not covered by the claimed invention:

Further, the main drive motor includes two drive motors connected via a coupling mechanism.

Further, the hybrid power drive system further includes a hydraulic drive system corresponding to at least one of the auxiliary drive axles. The hydraulic drive system includes a drive oil pump and two drive motors. The driving force generated by the engine is transmitted to the hydraulic drive system via a power takeoff, so as to drive the wheels on both sides of the auxiliary drive axle to rotate by the two drive motors respectively.

Further, the hydraulic drive system further includes a separation device disposed between the power takeoff and the drive oil pump of the hydraulic drive system.

The vehicle control unit is configured to control a separated state of the separation device to determine whether to transmit the driving force to the drive oil pump.

The following teachings are disclosed as optional design aspects of the claimed invention:
Further, a mechanical connection between the range extender system and the main coupling mechanism includes that the generator is mechanically connected to the main coupling mechanism via a clutch to transmit the driving force generated by the engine and/or the generator to the main coupling mechanism under the control of the vehicle control unit.

Further, the engine and the generator of the range extender system are connected via a clutch, so that the engine and the generator can be disconnected under the control of the vehicle control unit.

Further, a mechanical connection between the range extender system and the main coupling mechanism includes that the engine is mechanically connected to the main coupling mechanism via a clutch to transmit the driving force generated by the engine to the main coupling mechanism under the control of the vehicle control unit.

Further, the vehicle control unit is configured to control, according to a predetermined control strategy, the hybrid power drive system to be in different operating modes, the operating modes include: a pure electric mode, an extended-range drive mode, an engine drive mode, a hybrid drive mode, an in-situ power generation mode, and an energy recovery mode.

Further, the hybrid power drive system is in the pure electric mode, and under the control of the vehicle control unit:
When the power demand of the vehicle is small, the power battery device supplies power to the motor drive system.

When the power demand of the vehicle is large, the generator is controlled to operate as a drive motor, and the generator is disconnected from the engine. The power battery device supplies power to the motor drive system and/or the generator.

Further, the hybrid power drive system is in the extended-range drive mode, and under the control of the vehicle control unit, the generator generates power under the driving of the engine to supply the power to the motor drive system, and/or to charge the power battery device.

Further, the hybrid power drive system is in the engine drive mode, and under the control of the vehicle control unit, if the generator is mechanically connected to the main coupling mechanism via a clutch, the generator neither drives nor generates power, but only idles following the engine.

Further, the hybrid power drive system is in the hybrid drive mode, and under the control of the vehicle control unit, the engine and the motor drive system jointly drive the wheels to rotate.

Further, the hybrid power drive system is in the energy recovery mode, and under the control of the vehicle control unit, a coasting feedback force or a brake feedback force of the vehicle is transmitted to a drive motor of the motor drive system through a transmission mechanism, the drive motor operates as a generator, and electric energy generated charges the power battery device or supplies power to electrical loads of the vehicle.

Further, the hybrid power drive system is in the in-situ power generation mode, and under the control of the vehicle control unit, when the power of the power battery device is low and the vehicle is in a stationary state, the engine drives the generator to charge the power battery device.

According to another aspect of the invention, also provided is a vehicle, including the hybrid power drive system as described in any of the embodiments according to the invention above.

Further, the vehicle is a multi-drive-axle commercial vehicle.

In the hybrid power drive system of the invention, energy required for driving of the main drive motor may come from the range extender system and/or the power battery device to realize distributed energy supply, thus effectively solving the problem of short driving range of a pure electric drive solution. Moreover, a vehicle controller of the hybrid power drive system can control the engine and/or the generator of the range extender system to generate the driving force for different application operating conditions. For example, for urban operating conditions, by using a series function to drive the vehicle, the range extender system operates in a high-efficiency area. The range extender system provides energy to the main drive motor to drive the vehicle, the excess power generated by the range extender system can charge a power battery, and thus the economy of the vehicle can be effectively improved. For suburban and highway operating conditions, the engine can directly participate in vehicle driving without the conversion of mechanical energy to electrical energy to mechanical energy, thereby effectively improving the economy of the vehicle. Thus, the invention not only can realize different forms of energy supply, but also can realize different forms of power drive.

Further, compared with that the power drive of the traditional automobiles under different operating conditions (urban, highway, suburban) is realized by engines, the invention selects suitable driving modes for different operating conditions, which not only improves the economy of the vehicle, but also effectively meets special emission requirements of certain urban areas.

According to the following detailed descriptions of specific embodiments in conjunction with the accompanying drawings, those skilled in the art will have a better understanding of the above and other objects, advantages, and features of the invention.

### Brief Description of the Drawings

Hereinafter, some specific embodiments of the invention will be described in detail in an exemplary but non-limiting manner with reference to the drawings. The same reference numerals in the drawings indicate the same or similar parts or portions. Those skilled in the art should understand that these drawings are not necessarily drawn to scale. In the drawings:
Fig. 1 is a schematic structural diagram of a hybrid power drive system according to Embodiment I, which is not covered by the claimed invention;
Fig. 2 is a schematic structural diagram of a hybrid power drive system according to Embodiment II, which is not covered by the claimed invention;
Fig. 3 is a schematic structural diagram of a hybrid power drive system according to Embodiment III, which is an embodiment of the invention;
Fig. 4 is a schematic structural diagram of a hybrid power drive system according to Embodiment IV, which is not covered by the claimed invention;
Fig. 5 is a schematic structural diagram of a hybrid power drive system according to Embodiment V, which is not covered by the claimed invention;
Fig. 6 is a schematic structural diagram of a hybrid power drive system according to Embodiment VI, which is not covered by the claimed invention;
Fig. 7 is a schematic structural diagram of a hybrid power drive system according to Embodiment VII, which is an optional design aspect;
Fig. 8 is a schematic structural diagram of a hybrid power drive system according to Embodiment VIII, which is an optional design aspect; and
Fig. 9 is a schematic structural diagram of a hybrid power drive system according to Embodiment IX, which is an optional design aspect.

### Detailed Description of the Invention

Currently, the hybrid power systems of commercial vehicles are mainly of extended-range, the extended-range power systems have an obvious energy saving efficacy for the commercial vehicles mainly driving under urban operating conditions, but has no obvious energy saving efficacy for the road commercial vehicles often driving under suburban operating conditions and highway operating conditions. Two solutions are set forth below for illustration.

### Solution I

A dual-motor hybrid system (Intelligent Multi Mode Drive) consists of an Atkinson cycle gasoline engine, an electronically continuously variable transmission (e-CVT) containing a generator, a drive motor and a power separation device, a power control unit (PCU), and a lithium battery pack.

When a vehicle needs to drive at a low speed in case of traffic jam in a city, a pure electric drive mode is used. Energy for vehicle driving comes directly from an on-board lithium battery pack, and electric energy stored in the lithium battery pack is provided to a drive motor via the PCU to drive two front wheels to rotate. When acceleration is needed, it is switched to a hybrid power drive mode. In this case, a part of energy for the drive motor comes from electrical energy generated by the generator driven by the engine, and the other part of the energy comes from a power battery. During high speed cruising, it is switched to an engine drive mode. In this case, the power separation device is normally linked, and all power is directly provided by the engine, while the battery pack is in a standby state. When further acceleration is needed, it can be switched to the hybrid power drive mode at any time. The core concept of the hybrid power system is switching between different modes to realize efficient driving.

### Solution II

A hybrid power system consists of an engine, a planetary gear, an MG1 motor, an MG2 motor, and a power battery. The core concept of the power system is adjusting a planetary gear structure to realize different drive modes. The planetary gear structure is a core of the hybrid power system.

When the entire vehicle is low in power and is in a stationary state, a function of in-situ power generation can be realized through the adjustment of the planetary gear and the two motors. During starting and low-speed driving, the vehicle can drive in a pure electric mode. Driving in an extended-range mode can be realized, and in this case, the engine drives MG1 to generate power and supplies electrical energy to MG2, MG2 drives the entire vehicle, and the excess energy charges the power battery. A high-load driving mode can be realized, and in this case, the engine drives MG2 and MG1, MG2 drives the vehicle, and MG1 charges the power battery. Driving in a rapid acceleration mode can be realized, and in this case, the entire vehicle is driven jointly by MG1, MG2, and the engine.

It can be seen from the analysis on the two power systems that the two power systems can both realize a hybrid function (serial and parallel functions), but under the pure electric operating condition of an energy recovery machine, in the structure of the second solution, the drive motor needs to drag the engine to rotate, so the efficiency is low. The engine in the first solution only has a single-speed-ratio deceleration function during direct driving, and an adjustable engine high-efficiency range is narrow. Since the engine is directly connected to the generator, when the engine directly drives, the generator needs to be dragged, resulting in a certain efficiency loss. Only one motor operates during pure electric drive, which requires large power and size of the drive motor, and thus the selectivity is poor during the entire vehicle matching and arrangement.

In view of the effects of the commercial vehicle energy consumption limits and emission regulations in the future, and in order to cover the operating conditions of all types of urban commercial vehicles and road commercial vehicles, embodiments of the invention provide a hybrid power drive system. Hereinafter, the hybrid power drive system provided by the embodiments of the invention is described in detail through embodiments I, II and VI.

### Embodiment I not covered by the claimed invention:

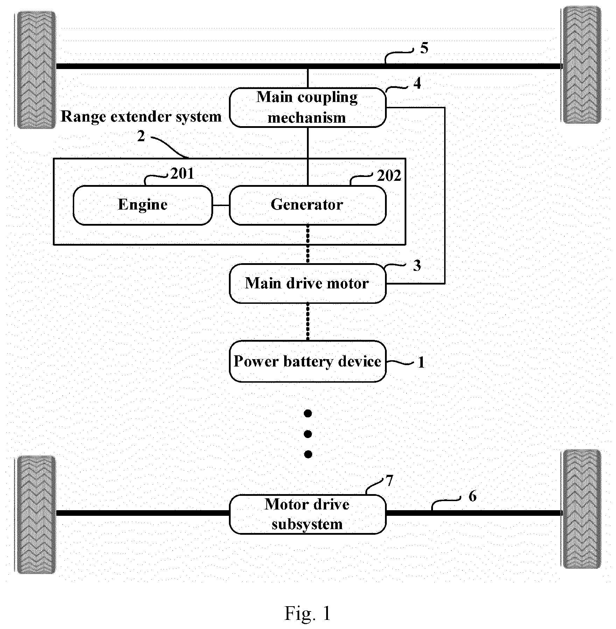

Fig. 1 shows a schematic structural diagram of a hybrid power drive system according to Embodiment I.

Referring to Fig. 1, the hybrid power drive system may include a power battery device 1, a range extender system 2, and a main drive motor 3. The power battery device 1 is configured to supply power to the main drive motor 3. The range extender system 2 may include an engine 201 and a generator 202, and the generator 202 is able to generate power under the driving of the engine 201 to supply the power to the main drive motor 3 and/or to charge the power battery device 1. In addition, the hybrid power drive system may further include a vehicle control unit (not shown in the figure) configured to control the engine 201 and/or the generator 202 in the range extender system 2 to generate a driving force. In the hybrid power drive system, the range extender system 2 and the main drive motor 3 are mechanically connected to a main coupling mechanism 4 respectively to transmit the driving force generated by the two to a main drive axle 5 of a vehicle by means of the main coupling mechanism 4, so as to drive wheels on both sides of the axle to rotate.

The vehicle control unit can control the range extender system 2 and a motor drive system (not shown in the figure) respectively to generate the driving force or control the two to generate the driving force at the same time, and the driving force is transmitted to the main drive axle 5 of the vehicle through the main coupling mechanism 4, so as to drive the wheels on both sides of the axle to rotate. The main drive motor 3 belongs to the motor drive system. The hybrid power drive system provided can perform power drive in different forms from a driving perspective. The hybrid power drive system provided in this embodiment can realize both series and parallel structural characteristics to achieve a hybrid function. The energy required for driving of the main drive motor 3 may come from the range extender system 2 and/or the power battery device 1 to realize distributed energy supply, thus solving the problem of short driving range of a pure electric drive solution. Fuel of the engine in an extended-range system 2 may use gasoline, diesel, natural gas, methanol and other fuels. Moreover, for new energy commercial vehicles, due to the wide coverage of vehicle types, if implementing the pure electric solution on all commercial vehicle types, for medium and heavy commercial vehicles, energy required by a battery thereof is larger, and in terms of cost and space, the possibility of implementation is small. Therefore, this hybrid power drive system is particularly suitable for the commercial vehicles.

In addition, the vehicle may include one or more auxiliary drive axles 6 in addition to the main drive axle 5. Accordingly, the hybrid power drive system may further include motor drive subsystems 7 corresponding to each of the auxiliary drive axles 6. Each of the motor drive subsystems 7 may be configured to drive wheels on both sides of each of the auxiliary drive axles 6 to rotate. Under the control of the vehicle control unit, the range extender system 2 and/or the power battery device 1 supplies power to the motor drive subsystems. According to different power requirements of different vehicles, a plurality of drive motors may be provided. By adjusting a load rate of the drive motors, each of the drive motors of the entire vehicle can operate in a high-efficiency area under common operating conditions.

In an alternative embodiment not covered by the claimed invention, the hybrid power drive system may not include the main drive motor 3 above, and the motor drive system in the hybrid power drive system includes the motor drive subsystem 7 shown in Fig. 1. The motor drive subsystem 7 may drive a wheel on one side of the auxiliary drive axle 6 to rotate, and may transmit a driving force generated therefrom to the main drive axle 5 of the vehicle via the main coupling mechanism 4, so as to drive wheels on both sides of the axle to rotate.

In an optional embodiment not covered by the claimed invention, the motor drive system includes a motor drive subsystem corresponding to at least one of the main drive axle 5 and the auxiliary drive axle 6, the motor drive subsystem is configured to transmit the generated driving force to the corresponding drive axle. Actually, the main drive motor 3 mechanically connected to the main coupling mechanism 4 described foregoing belongs to the motor drive subsystem corresponding to the main drive axle 5, and the main drive motor 3 transmits the generated driving force to the main drive axle 5 of the vehicle by means of the main coupling mechanism 4. Moreover, the motor drive subsystem 7 corresponding to the auxiliary drive axle 6 has been described in the foregoing, and the descriptions thereof are omitted here.

Based on the hybrid power drive system provided in this embodiment, for urban operating conditions, the entire vehicle can be driven using a series function to make the range extender system 2 operate in the high-efficiency area, the range extender system 2 provides energy to the main drive motor to drive the entire vehicle, and the excess power generated by the range extender system 2 can charge the power battery device 1 to improve the economy of the entire vehicle and enable the vehicle to meet emission requirements. For suburban and highway operating conditions, the engine 201 can directly participate in driving without the conversion of mechanical energy to electrical energy to mechanical energy, and the economy of the vehicle is higher.

### Embodiment II not covered by the claimed invention:

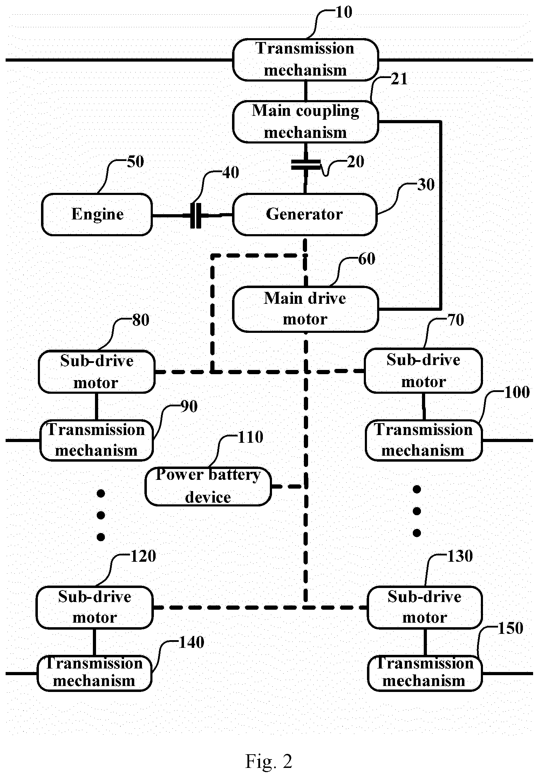

Fig. 2 shows a schematic structural diagram of a hybrid power drive system according to Embodiment II.

In the embodiment shown in Fig. 2, the hybrid power drive system includes a range extender system consisting of an engine 50 and a generator 30, and a main coupling mechanism 21 coupled to the range extender system. The main coupling mechanism 21 is also coupled to a main drive motor 60, and the main coupling mechanism 21 is coupled to a main drive axle via a transmission mechanism 10. In addition, the main drive motor 60 may be electrically connected to a power battery device 110.

As described above, the range extender system may be mechanically connected to the main coupling mechanism 21, and preferably, the generator 30 in the range extender system may be connected to the main coupling mechanism 21 via a clutch 20, to transmit a driving force generated by the engine 50 and/or the generator 30 to the main coupling mechanism 21 under the control of a vehicle control unit (not shown in the figure).

With continued reference to the embodiment shown in Fig. 2, a vehicle may include two auxiliary drive axles, and the hybrid power drive system may include sub-drive systems corresponding to the two auxiliary drive axles, respectively. Either of the sub-drive systems belongs to the motor drive subsystem. Either of the sub-drive systems includes two sub-drive motors (such as a sub-drive motor 80 and a sub-drive motor 70, and a sub-drive motor 120 and a sub-drive motor 130), and each of the sub-drive motors drives a wheel on one side of the auxiliary drive axle to rotate respectively. Each of the sub-drive motors is coupled to the auxiliary drive axle via a transmission mechanism, and each of the sub-drive motors may be electrically connected to the power battery device 110.

In the embodiment shown in Fig. 2, the sub-drive motor 70, the sub-drive motor 80, a transmission mechanism 90, and a transmission mechanism 100 may be used as an electric drive subsystem. For a multi-axle commercial vehicle, a plurality of electric drive subsystems may be added to realize multi-axle multi-wheel drive. Preferably, the sub-drive motor 70, the sub-drive motor 80, the sub-drive motor 120, and the sub-drive motor 130 in the embodiment shown in Fig. 2 may be in a drive form such as a rim motor and a hub motor. The transmission mechanism 90, a transmission mechanism 110, a transmission mechanism 140, and a transmission mechanism 150 may be integrated with a differential function or may not be integrated with a differential function. When the transmission mechanism is not integrated with the differential function, the sub-drive motor 70, the sub-drive motor 80, the sub-drive motor 120, and the sub-drive motor 130 realize a differential function of the wheels through a speed regulation function.

Based on the hybrid power drive system provided in this embodiment, the hybrid power drive system includes not only the main drive motor 60, but also a plurality of sub-drive motors (e.g., the sub-drive motor 70, the sub-drive motor 80, the sub-drive motor 120, and the sub-drive motor 130). Therefore, the hybrid drive of the engine, a single drive motor and/or a plurality of drive motors can be realized, and a combination of the engine and/or different drive motor forms can be realized according to different vehicle types, thereby improving the efficiency of the hybrid power drive system.

In an embodiment of the invention, the vehicle control unit may be configured to control, according to a predetermined control strategy, the hybrid power drive system to be in different operating modes, such as a pure electric mode, an extended-range drive mode, an engine drive mode, a hybrid drive mode, an in-situ power generation mode, and an energy recovery mode. All operating modes are described below respectively.

Pure electric mode: When the hybrid power drive system is in the pure electric mode, under the control of the vehicle control unit, when the power demand of the vehicle is small, the power battery device supplies power to a motor drive system, for example, to the main drive motor in the motor drive system. When the power demand of the vehicle is large, the generator is controlled to operate as a drive motor and the generator is disconnected from the engine. The power battery device supplies power to the motor drive system and/or the generator, for example, the power battery device supplies power to the main drive motor, and/or the generator, and/or the sub-drive motor. There may be a plurality of sub-drive motors. It should be noted that in the pure electric mode, it is necessary to ensure that the power battery device has sufficient power to provide electric energy for the drive motor better.

Extended-range drive mode: When the hybrid power drive system is in the extended-range drive mode, under the control of the vehicle control unit, the generator generates power under the driving of the engine to supply the power to the motor drive system, for example, the generator generates power under the driving of the engine to supply the power to the main drive motor and/or the sub-drive motor, and/or to charge the power battery device. Moreover, the power battery device in this mode can supply power to the main drive motor and/or the sub-drive motor at the same time.

Engine drive mode: When the hybrid power drive system is in the engine drive mode, under the control of the vehicle control unit, if the generator is mechanically connected to the main coupling mechanism via the clutch, the generator neither drives nor generates power, but only idles following the engine. Instead, the engine directly participates in driving. For example, under road or highway operating conditions, the engine can be selected to directly participate in the driving. In this case, the energy of the engine is directly output in a form of mechanical energy without subjecting the conversion of mechanical energy to electrical energy to mechanical energy, so that the driving efficiency is improved.

Hybrid drive mode: When the hybrid power drive system is in the hybrid drive mode, under the control of the vehicle control unit, the engine and the motor drive system jointly drive the wheels to rotate. For example, the engine, the main drive motor and/or the sub-drive motor jointly drive the wheels to rotate. In this mode, the engine will directly participate in the driving. In addition, the main drive motor and/or the sub-drive motor will also participate in the driving. The energy of the drive motor comes from electric energy generated by the generator driven by the engine and/or electric energy provided by the power battery device. This mode is more suitable for the situation where the vehicle requires larger power.

Energy recovery mode: When the hybrid power drive system is in the energy recovery mode, under the control of the vehicle control unit, a coasting feedback force or a brake feedback force of the entire vehicle is transmitted to the drive motor, such as the main drive motor, of the motor drive system through the transmission mechanism. In this case, the drive motor (for example, the main drive motor) operates as a generator and the electric energy generated charges the power battery device or is used by electrical loads of the entire vehicle. Electrical loads of the entire vehicle may include a display, an audio, and an air conditioner provided on the vehicle.

In-situ power generation mode: When the hybrid power drive system is in the in-situ power generation mode, under the control of the vehicle control unit, the engine drives the generator to charge the power battery device. This mode is suitable for the situation where the power battery device is low in power and the entire vehicle is in a stationary state.

The hybrid power drive system shown in Fig. 2 can operate in the 6 operating modes above respectively. Taking Fig. 2 as an example, an operating process of each component in the hybrid power drive system under different operating modes is specifically described below.

### Pure electric mode

In the pure electric mode, when the power demand of the vehicle is small, energy is provided to the main drive motor 60 via the power battery device 110, and a driving force generated by the main drive motor 60 is transmitted to the transmission mechanism 10 by means of the main coupling mechanism 21, and then drives the wheels to rotate via the main drive axle. The transmission mechanism 10 may be integrated with deceleration and differential functions. When the demand power of the vehicle is large, in addition to the operation of the main drive motor 60, the generator 30 can be controlled to operate as a drive motor according to a signal of the vehicle control unit, and the sub-drive motor 70 and the sub-drive motor 80 are controlled to operate, and/or the sub-drive motor 120 and the sub-drive motor 130 are controlled to operate, and/or the generator 30 is controlled to operate. When the generator 30 operates as a drive motor, a clutch 20 is controlled to close and a clutch 40 is disengaged. The power battery device 110 provides energy to the main drive motor 60, the sub-drive motor 70, the sub-drive motor 80, and/or the sub-drive motor 120, the sub-drive motor 130, and/ or the generator 30.

### Extended-range drive mode

In the extended-range drive mode, the main drive motor 60 and/or the sub-drive motor (such as the sub-drive motor 70, the sub-drive motor 80, the sub-drive motor 120, and the sub-drive motor 130 in Fig. 2) generate(s) a driving force, and drive(s) corresponding wheels to drive the vehicle to run. The energy of the main drive motor 60 and/or the sub-drive motor is provided by the range extender system consisting of the engine 50 and the generator 30 and/or the power battery device 110.

In this mode, the clutch 40 is closed, the engine 50 drives the generator 30 to generate power through the clutch 40, the vehicle control unit controls the specific drive motor to participate in operation according to the needs of the entire vehicle, and the vehicle control unit controls, according to the power required by the entire vehicle, the main drive motor 60, and/or the sub-drive motor 70 and the sub-drive motor 80 to operate, and/or the sub-drive motor 120 and the sub-drive motor 130 to operate. According to the calculation of the vehicle control unit, the energy of the drive motors above may also be provided by the power battery device 110 and/or the range extender system.

### Engine drive mode

In the engine drive mode, both the clutch 40 and the clutch 20 are closed, fuel is converted into mechanical energy by the engine 50, and the wheels are driven by the clutch and the transmission mechanism 10 to drive the vehicle to run. In this operating mode, the main drive motor 60 does not operate. Specifically, the engine 50 generates a driving force and transmits the driving force to the main drive axle via the clutch 40, the generator 30, the clutch 20, the main coupling mechanism 21 and the transmission mechanism 10, and the main drive axle drives the wheels on both sides thereof to rotate, and then drives the vehicle to run. In this case, the clutch 40 and the clutch 20 are closed, while the generator 30 neither drives nor generates power, but only idles following the engine 50, so as to realize the engine drive mode.

### Hybrid drive mode

In the hybrid drive mode, the engine 50 and the drive motor (including the main drive motor 60 and/or the sub-drive motor) jointly drive the vehicle. According to a control signal of the vehicle control unit, the energy of the drive motor may be provided by the power battery device 110 and/or the range extender system. The range extender system may generate power at a fixed point at different speeds, or generate power in a power following mode.

When the power of the drive motor is provided by the power battery device 110, the engine 50 drives the vehicle to run via the clutch 40, the generator 30, the clutch 20, the main coupling mechanism 21 and the transmission mechanism 10. In this case, the generator 30 neither generates power nor drives, but only idles following the engine, and meanwhile, the power battery device 110 provides energy to the main drive motor 60, and/or the sub-drive motor 70 and the sub-drive motor 80, and/or the sub-drive motor 120 and the sub-drive motor 130. The drive motors above drive, through respective transmission mechanisms, the wheels on both sides of the drive axles where the transmission mechanisms are located to rotate.

When the power of the drive motor partially comes from the range extender system, the engine 50 also drives the generator 30 to generate power, in addition to participating in entire vehicle driving. In this case, the engine 50 drives the vehicle to run via the clutch 40, the generator 30, the clutch 20, the main coupling mechanism 21 and the transmission mechanism 10. In this case, the generator 30 operates as a generator. The main drive motor 60, and/or the sub-drive motor 70 and the sub-drive motor 80, and/or the sub-drive motor 120 and the sub-drive motor 130, and/or the generator 30 are controlled to operate according to the control signal of the vehicle control unit, and the energy of the drive motor is controlled to be provided by the power battery device 110 and/or the range extender system according to the control signal of the vehicle control unit.

### In-situ power generation mode

In the in-situ power generation mode, the engine 50 drives the generator 30 to generate power via the clutch 40. In this case, the electric energy generated by the generator 30 may charge the power battery device 110, and may be supplied to electrical loads.

### Energy recovery model

In the energy recovery mode, when the vehicle is in a coasting or braking condition, the wheels are transmitted to the corresponding drive motors (such as the main drive motor 60, the sub-drive motor 70, and the sub-drive motor 80) through the transmission mechanisms to which they are connected (such as the transmission mechanism 10, the transmission mechanism 90, and the transmission mechanism 100). In this case, the drive motor operates as a generator and the generated electric energy charges the power battery device 110. According to the control signal of the vehicle control unit, during energy recovery, the main drive motor 60, and/or the sub-drive motor 70 and the sub-drive motor 80, and/or the sub-drive motor 120 and the sub-drive motor 130, and/or the generator 30 are controlled to operate as a generator.

### Embodiment III according to the invention:

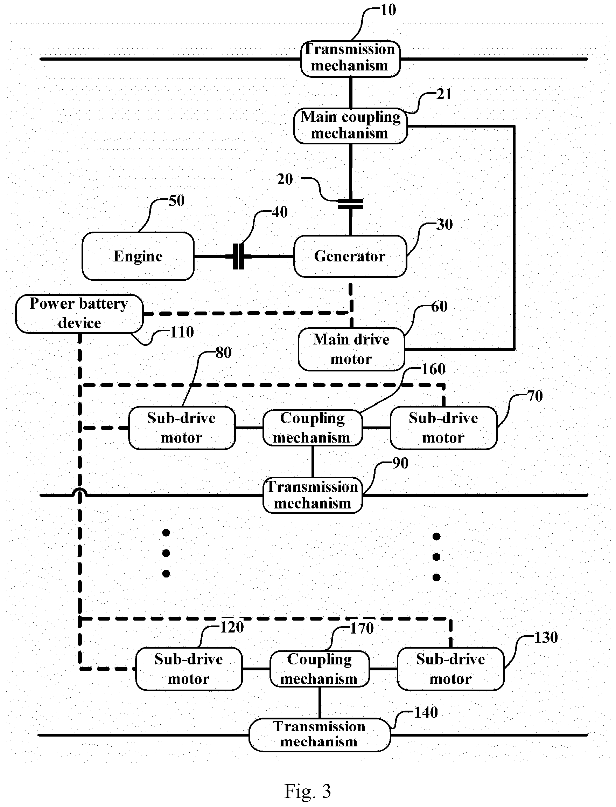

Fig. 3 shows a schematic structural diagram of a hybrid power drive system according to an embodiment of the invention.

The hybrid power drive system in Fig. 3 is mainly different from the hybrid power drive system in Fig. 2 in the structure of the motor drive subsystem. In Fig. 2, the sub-drive motor 70, the sub-drive motor 80, the transmission mechanism 90 and the transmission mechanism 100 may be regarded as a motor drive subsystem, and for multi-axle commercial vehicles, a plurality of such sub-drive systems may be added to realize multi-axle multi-wheel drive. While in Fig. 3, a sub-drive motor 70, a coupling mechanism 160, a sub-drive motor 80 and a transmission mechanism 90 form a motor drive subsystem, and for multi-axle commercial vehicles, a plurality of such sub-drive systems may be added to realize multi-axle multi-wheel drive. That is, the motor drive subsystem shown in Fig. 3 also includes two sub-drive motors, such as the sub-drive motor 70 and the sub-drive motor 80. The two sub-drive motors transmit a driving force to the auxiliary drive axle via the coupling mechanism 160 to drive wheels on both sides of the axle to rotate. The biggest advantage of this embodiment is single-axle dual-motor drive. When the entire vehicle is fully loaded, the dual motors operate at full time, and when the entire vehicle has no load, a single motor operates, which can improve the economy of the entire vehicle. An operating range of the motors can be adjusted for different loads of the entire vehicle, thus optimizing the economy of the entire vehicle.

### Embodiment IV not covered by the claimed invention:

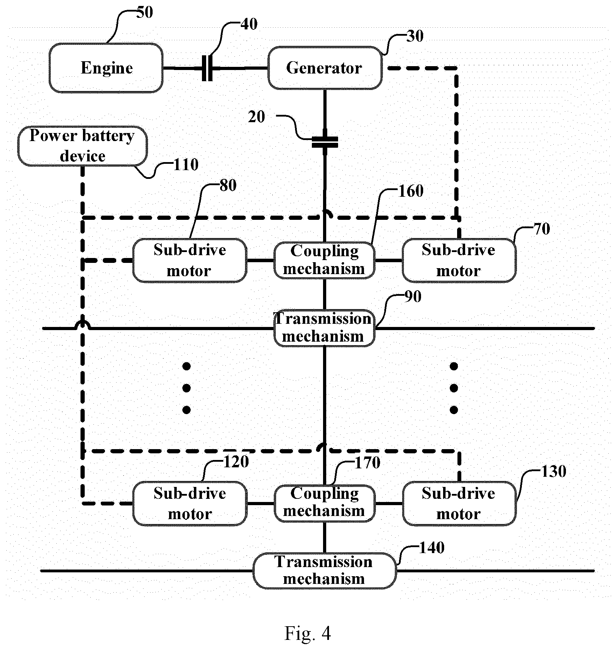

The structure of the hybrid power drive system in Fig. 4 is different from the embodiment shown in Fig. 3 in that in Fig. 4, a sub-drive motor 70, a coupling mechanism 160, a sub-drive motor 80 and a transmission mechanism 90 form an electric drive subsystem, and for commercial vehicles, a plurality of such sub-drive systems may be added to realize multi-axle multi-wheel drive, which is the same as the concept that the sub-drive motor 70, the coupling mechanism 160, the sub-drive motor 80 and the transmission mechanism 90 form an electric drive subsystem, and for commercial vehicles, a plurality of such sub-drive systems may be added to realize multi-axle multi-wheel drive in Fig. 3. However, the biggest difference between Fig. 4 and Fig. 2 is that the main drive motor 60 in Fig. 2 is equivalent to an integrated system consisting of the sub-drive motor 70, the coupling mechanism 160, the sub-drive motor 80 and the transmission mechanism 90 in Fig. 4.

### Embodiment V not covered by the claimed invention:

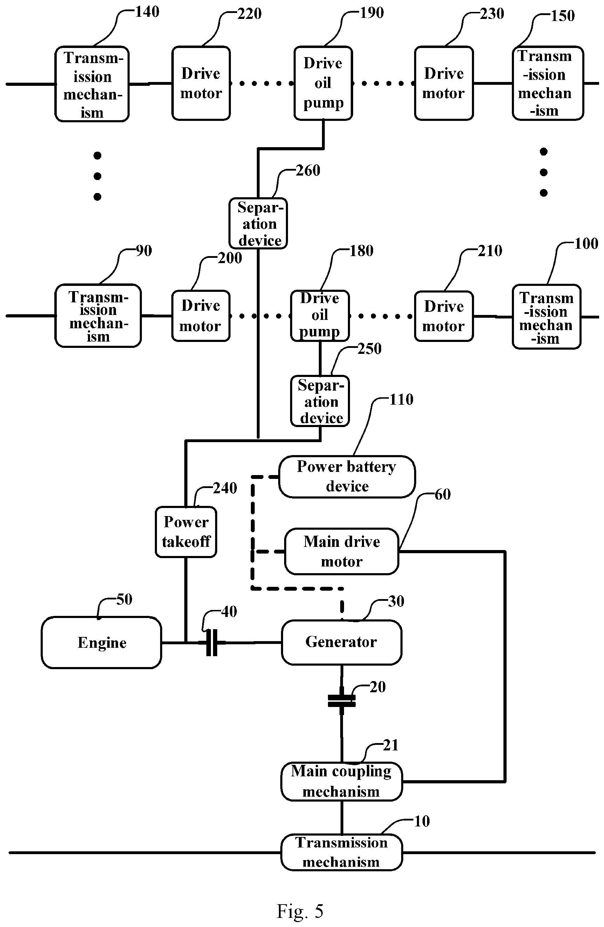

Referring to Fig. 5, the architecture of the embodiment is substantially the same as that of the embodiments shown in Fig. 2 and Fig. 3. The main difference lies in that the motor drive on an auxiliary drive axle of the vehicle is changed to hydraulic drive. The hybrid power drive system further includes a hydraulic drive system corresponding to at least one auxiliary drive axle. The hydraulic drive system includes a drive oil pump 180 and two drive motors (such as a drive motor 200 and a drive motor 210 in Fig. 5). A driving force generated by an engine 50 is transmitted to the hydraulic drive system via a power takeoff 240, so as to drive wheels on both sides of the auxiliary drive axle to rotate by the two drive motors.

Further, the hydraulic drive system includes a separation device 250 disposed between the power takeoff 240 and the drive oil pump 180 of the hydraulic drive system. The vehicle control unit (not shown in the figure) is configured to control a separated state of the separation device 250 to determine whether to transmit the driving force to the drive oil pump 180.

The operating principle of the hybrid power drive system shown in Fig. 5 is described below. The driving force generated by the engine 50 is transmitted to the separation device 250 via the power takeoff 240, and the separation device 250 can transmit the driving force from the engine 50 to the drive oil pump 180. Of course, the separation device 250 may be in the separated state, so as not to transmit the driving force of the engine 50. The drive oil pump 180 converts the received driving force into hydraulic pressure to output to the drive motor 200 and the drive motor 210, and then drives the wheels on both sides of the auxiliary drive axle to rotate through a transmission mechanism 90 and a transmission mechanism 100.

When the hybrid power drive system has a demand for a low speed and a larger torque, a separation device 260 may be in a closed state. In this case, a plurality of hydraulic drive systems operate and jointly drive with the engine 50 and/or a main drive motor 60, so that the power performance of the entire vehicle is improved. When a vehicle speed is high, due to a large hydraulic loss, the separation device 250 and the separation device 260 are in the separated state in this case, and the hybrid power drive system exits the hydraulic drive. Since the hydraulic drive provides a larger torque at low speed, when this distributed drive mode is implemented, the torque requirements for the engine 50, the main drive motor 60 and the generator 30 can be reduced when matching, so that the development of parts is easier. This mode can be used in vehicles with high power performance requirements under special operating conditions.

### Embodiment VI not covered by the claimed invention:

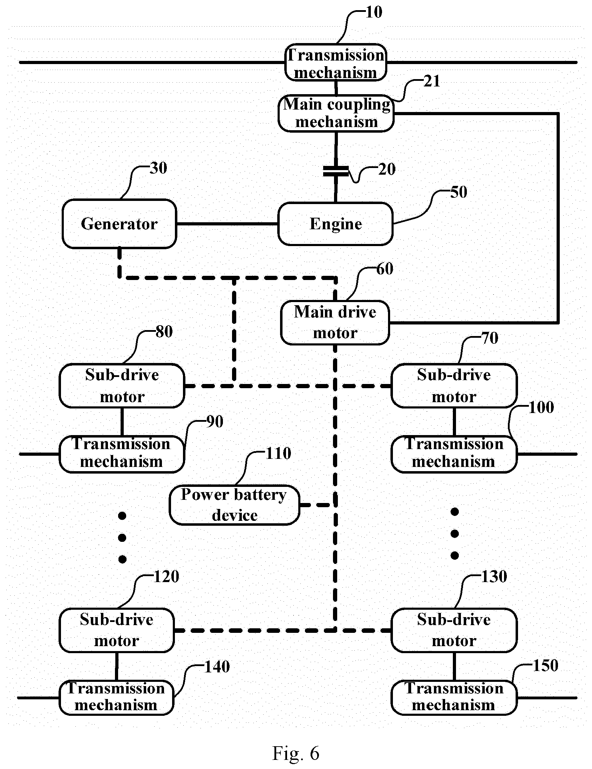

Referring to Fig. 6, the architecture of the embodiment is substantially the same as that of the embodiment shown in Fig. 2. The main difference lies in that in the embodiment of Fig. 6, a rim motor or a hub motor may be used instead of the sub-drive motor 80 and the sub-drive motor 70 in the motor drive subsystem consisting of the sub-drive motor 80, the transmission mechanism 90, the sub-drive motor 70 and the transmission mechanism 100 in Fig. 1. For commercial vehicles with a plurality of drive axles, a plurality of such motor drive subsystems to realize multi-axle multi-wheel drive may be added.

Another difference lies in that an engine 50 is mechanically connected to a main coupling mechanism 21 via a clutch 20 to transmit the driving force generated by the engine 50 to the main coupling mechanism 21 under the control of the vehicle control unit (not shown in the figure). In this embodiment, a generator 30 is at a front end of the engine 50 and is only used to generate power. That is, when the clutch 20 is disconnected, the generator 30 and the engine 50 form a range extender system, the operating mode of which may be generating power at a fixed point with multiple speeds, and may be generating power in a power following mode.

### Embodiment VII

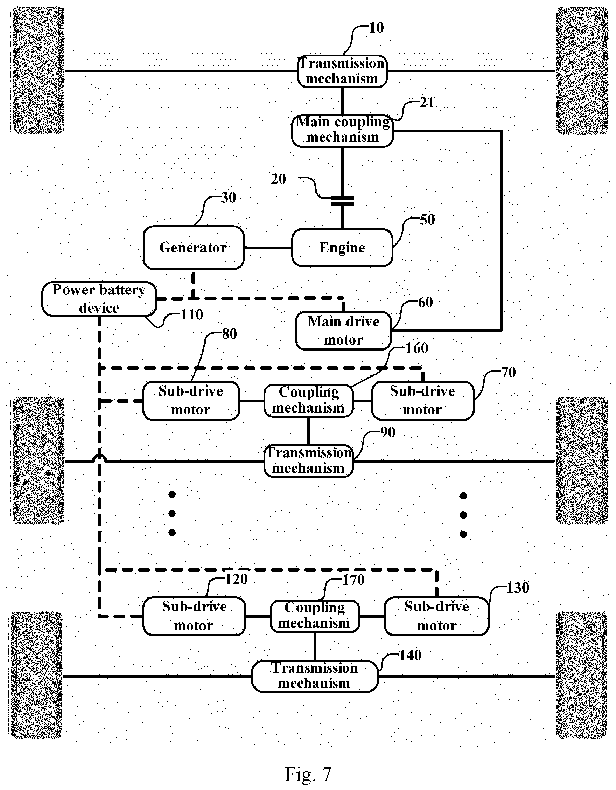

Referring to Fig. 7, a sub-drive motor 80, a coupling mechanism 160, a sub-drive motor 70 and a transmission mechanism 90 form a motor drive subsystem, and for multi-axle commercial vehicles, a plurality of such motor drive subsystems may be added to realize multi-axle multi-wheel drive. The biggest advantage of this solution is single-axle dual-motor drive. When the entire vehicle is fully loaded, the dual motors operate at full time, and when the entire vehicle has no load, a single motor operates, which can improve the economy of the entire vehicle. An operating range of the motors can be adjusted for different loads of the entire vehicle, thus optimizing the economy of the entire vehicle.

Another feature of this solution is that a generator 30 is at a front end of an engine 50 and is only used to generate power. That is, when the clutch 20 is disconnected, the generator 30 and the engine 50 form a range extender system, the operating mode of which may be generating power at a fixed point with multiple speeds and may be generating power in a power following mode.

### Embodiment VIII

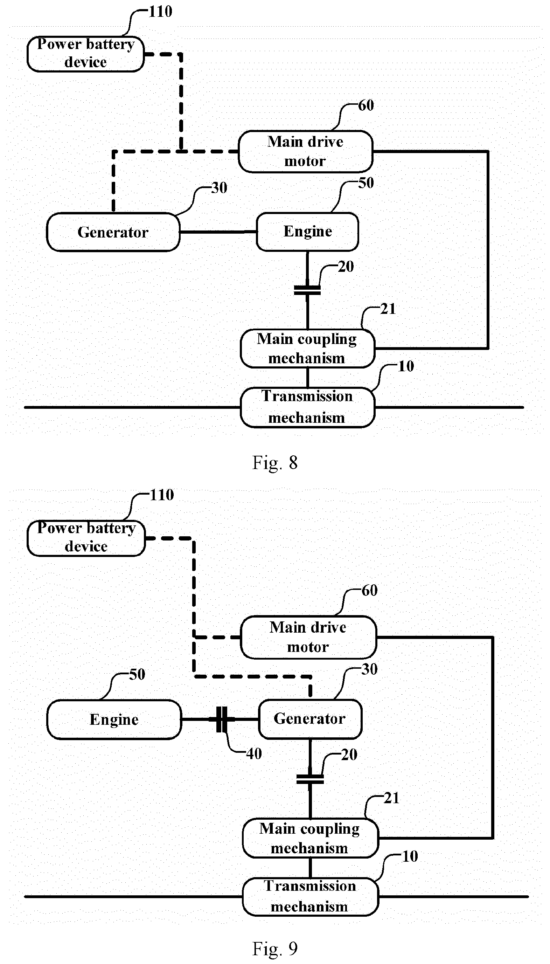

Referring to Fig. 8, a main drive motor 60, a main coupling mechanism 21 and a transmission mechanism 10 form a motor drive subsystem, and an engine 50, the main coupling mechanism 21 and the transmission mechanism 10 form an engine drive subsystem. The biggest advantage of this solution is a single-axle dual- drive system. When the entire vehicle is fully loaded, a dual drive system operates at full time, and when the entire vehicle is empty, a single motor operates, which can improve the economy of the entire vehicle. An operating range of the dual drive system can be adjusted for different loads of the entire vehicle, thus optimizing the economy of the entire vehicle.

Another feature of this solution is that a generator 30 is at a front end of the engine 50 and is only used to generate power. That is, when a clutch 20 is disconnected, the generator 30 and the engine 50 form a range extender system, the operating mode of which may be generating power at a fixed point with multiple speeds to supply power to the entire vehicle, or to charge the power battery device 110, and may be generating power in a power following mode.

### Embodiment IX

Referring to Fig. 9, a main drive motor 60, a main coupling mechanism 21 and a transmission mechanism 10 form a motor drive subsystem, an engine 50, the main coupling mechanism 21 and the transmission mechanism 10 form an engine drive subsystem, and a generator 30, the main coupling mechanism 21 and the transmission mechanism 10 form a generator drive subsystem. The biggest advantage of this solution is a single-axle three-drive system. When the entire vehicle is fully loaded, a three-drive system operates at full time, and when the entire vehicle has no load, a single motor operates to drive, which can improve the economy of the entire vehicle. An operating range of the three-drive system can be adjusted for different loads of the entire vehicle, thus optimizing the economy of the entire vehicle.

Another feature of this solution is that the generator 30 is at a rear end of the engine 50 and may be used to generate power and drive. That is, when a clutch 40 is disconnected, the generator 30, the main coupling mechanism 21 and the transmission mechanism 10 form a generator drive subsystem which may be used to generate power. When a clutch 20 is disconnected, and the clutch 40 is closed, the generator 30 and the engine 50 form an range extender system, the operating mode of which may be generating power at a fixed point with multiple speeds to supply power to the entire vehicle, or to charge the power battery device 110, and may be generating power in a power following mode.

Based on the inventive concept presented herein, an embodiment of the invention further provides a vehicle, and the vehicle includes the hybrid power drive system in any of the above embodiments of the invention. The vehicle in this embodiment may be a multi-drive-axle commercial vehicle.

The vehicle of the embodiment of the invention may be driven by an engine and/or a drive motor, and energy of the drive motor may be provided by energy supplied by a power battery device or a range extender system consisting of the engine and a generator, or a combination of the two. The invention can develop new energy commercial vehicles according to actual needs and combine the characteristics of the hybrid power drive system of the above embodiments to select different energy supply combinations and control strategies to realize economy improvement.

In addition, distributed drive mainly considers the characteristics and operating properties of the commercial vehicles per se. Due to the wide coverage of the commercial vehicles, there are vehicle types of which the entire vehicle weight ranges from 3.5 T to 49 T. For lighter commercial vehicles, a central motor or a single motor may be used to drive, while for other commercial vehicles with larger size and weight, if using the central motor or single motor to drive, the power and torque of a drive motor will be relatively large, but for the entire vehicle, the efficiency of the drive motor will be lower when it runs at low speed and low load (operating at a low speed and low torque range). In a pure electric mode, if using two or more motors to drive, the drive efficiency may be improved by increasing a load rate of the drive motor to realize distributed power drive. In addition, in a hybrid drive mode, the distributed drive may be realized by the engine, a single drive motor, and/or a plurality of drive motors.

In the hybrid power drive system of the invention, energy required for driving of the main drive motor may come from the range extender system and/or the power battery device to realize distributed energy supply, thus effectively solving the problem of short driving range of a pure electric drive solution. Moreover, a vehicle controller of the hybrid power drive system can control the engine and/or the generator of the range extender system to generate the driving force for different application operating conditions. For example, for urban operating conditions, by using a series function to drive the vehicle, the range extender system operates in a high-efficiency area. The range extender system provides energy to the main drive motor to drive the vehicle, the excess power generated by the range extender system can charge a power battery, and thus the economy of the vehicle can be effectively improved. For suburban and highway operating conditions, the engine can directly participate in vehicle driving without the conversion of mechanical energy to electrical energy to mechanical energy, thereby effectively improving the economy of the vehicle. Thus, the invention not only can realize different forms of energy supply, but also can realize different forms of power drive.

Further, compared with that the power drive of the traditional automobiles under different operating conditions (urban, highway, suburban) is realized by engines, the invention selects suitable driving modes for different operating conditions, which not only improves the economy of the vehicle, but also effectively meets special emission requirements of certain urban areas.

## Claims

1. A hybrid power drive system, including a power battery device (1; 110), a range extender system (2), and a motor drive system (3), wherein the power battery device is configured to supply power to the motor drive system, the range extender system includes an engine (50; 201) and a generator (30; 202), and the generator is able to generate power under the driving of the engine to supply the power to the motor drive system and/or charge the power battery device; and the hybrid power drive system further including:
a vehicle control unit, configured to control the engine and/or the generator of the range extender system to generate a driving force,
wherein the range extender system is mechanically connected to a main coupling mechanism (4; 21) to transmit the generated driving force to a main drive axle (5) of a vehicle by means of the main coupling mechanism, to drive wheels on both sides of the axle to rotate, wherein the vehicle further including one or more auxiliary drive axles (6), wherein the motor drive system includes a motor drive subsystem (7) corresponding to at least one of the main drive axle and the auxiliary drive axles, and the motor drive subsystem is configured to transmit the generated driving force to the corresponding drive axle,
wherein the motor drive system includes a motor drive subsystem corresponding to the auxiliary drive axle, the motor drive subsystem corresponding to the auxiliary drive axle includes two sub-drive motors (80; 70; 120; 130), and the two sub-drive motors transmit the driving force to the auxiliary drive axle (6) via a coupling mechanism (170) to drive wheels on both sides of the axle to rotate, wherein
the motor drive system further includes a motor drive subsystem corresponding to the main drive axle (6), the motor drive subsystem corresponding to the main drive axle (6) includes a main drive motor (3; 60), and the main drive motor is mechanically connected to the main coupling mechanism to transmit the generated driving force to the main drive axle of the vehicle through the main coupling mechanism, and wherein the main drive motor (3; 60) and the generator (30; 202) are two separate components.

2. The hybrid power drive system according to claim 1, wherein a mechanical connection between the range extender system (2) and the main coupling mechanism (4; 21) includes that the generator (30; 202) is mechanically connected to the main coupling mechanism via a clutch (20) to transmit the driving force generated by the engine (50) and/or the generator to the main coupling mechanism under the control of the vehicle control unit.

3. The hybrid power drive system according to claim 2, wherein the engine (50; 201) and the generator (30; 202) of the range extender system (2) are connected via a clutch (40), so that the engine and the generator can be disconnected under the control of the vehicle control unit.

4. The hybrid power drive system according to claim 1, wherein a mechanical connection between the range extender system (2) and the main coupling mechanism (4; 21) includes that the engine (50; 201) is mechanically connected to the main coupling mechanism via a clutch (20) to transmit the driving force generated by the engine to the main coupling mechanism under the control of the vehicle control unit.

5. The hybrid power drive system according to any one of claims 1 to 4, wherein the vehicle control unit is configured to control, according to a predetermined control strategy, the hybrid power drive system to be in different operating modes, wherein the operating modes includes: a pure electric mode, an extended-range drive mode, an engine drive mode, a hybrid drive mode, an in-situ power generation mode, and an energy recovery mode.

6. The hybrid power drive system according to claims 3 and 5, wherein the hybrid power drive system is in the pure electric mode, and under the control of the vehicle control unit,
when the power demand of the vehicle is small, the power battery (1; 110) device supplies the power to the motor drive system (3); and
when the power demand of the vehicle is large, the generator (30; 202) is controlled to operate as a drive motor, and the generator is disconnected from the engine; and the power battery device supplies the power to the motor drive system and/or the generator.

7. The hybrid power drive system according to claim 5, wherein the hybrid power drive system is in the extended-range drive mode, and under the control of the vehicle control unit,
the generator (30; 202) generates power under the driving of the engine (50; 201) to supply the power to the motor drive system (3), and/or to charge the power battery device (1; 110).

8. The hybrid power drive system according to claim 5, wherein the hybrid power drive system is in the engine drive mode, and under the control of the vehicle control unit,
if the generator (30; 202) is mechanically connected to the main coupling mechanism (4; 21) via a clutch (20), the generator neither drives nor generates power, but only idles following the engine (50; 201).

9. The hybrid power drive system according to claim 5, wherein the hybrid power drive system is in the hybrid drive mode, and under the control of the vehicle control unit,
the engine (50; 201) and the motor drive system (3) jointly drive the wheels to rotate.

10. The hybrid power drive system according to claim 5, wherein the hybrid power drive system is in the energy recovery mode, and under the control of the vehicle control unit,
a coasting feedback force or a brake feedback force of the vehicle is transmitted via a coupling mechanism to a drive motor of the motor drive system (3) through a transmission mechanism (10; 90; 100; 140; 150), the drive motor operates as a generator, and electric energy generated charges the power battery device (1; 110) or supplies power to electrical loads of the vehicle.

11. The hybrid power drive system according to claim 2 or 3 and to claim 5, wherein the hybrid power drive system is in the in-situ power generation mode, and under the control of the vehicle control unit,
when the power battery device (1; 110) is low in power and the vehicle is in a stationary state, the engine (50; 201) drives the generator (30; 202) to charge the power battery device.

12. A vehicle, including the hybrid power drive system according to any one of claims 1 to 11.

13. The vehicle according to claim 12, wherein the vehicle is a multi-drive-axle commercial vehicle.

## Patentansprüche

1. Hybridkraftantriebssystem, umfassend eine Leistungsbatterievorrichtung (1; 110), ein Reichweitenverlängerungssystem (2) und ein Motorantriebssystem (3), wobei die Leistungsbatterievorrichtung konfiguriert ist, um das Motorantriebssystem mit Strom zu versorgen, das Reichweitenverlängerungssystem einen Motor (50; 201) und einen Generator (30; 202) umfasst und der Generator in der Lage ist, unter dem Antrieb des Motors Strom zu erzeugen, um das Motorantriebssystem mit Strom zu versorgen und/oder die Leistungsbatterievorrichtung zu laden; und wobei das Hybridkraftantriebssystem ferner umfasst:
eine Fahrzeugsteuereinheit, die konfiguriert ist, um den Motor und/oder den Generator des Reichweitenverlängerungssystems zu steuern, um eine Antriebskraft zu erzeugen,
wobei das Reichweitenverlängerungssystem mechanisch mit einem Hauptkupplungsmechanismus (4; 21) verbunden ist, um die erzeugte Antriebskraft mittels des Hauptkupplungsmechanismus auf eine Hauptantriebsachse (5) eines Fahrzeugs zu übertragen, um Räder auf beiden Seiten der Achse zum Drehen anzutreiben, wobei das Fahrzeug ferner eine oder mehrere Hilfsantriebsachsen (6) umfasst, wobei das Motorantriebssystem ein Motorantriebsuntersystem (7) umfasst, das mindestens einer von der Hauptantriebsachse und den Hilfsantriebsachsen entspricht, und das Motorantriebsuntersystem konfiguriert ist, um die erzeugte Antriebskraft auf die entsprechende Antriebsachse zu übertragen,
wobei das Motorantriebssystem ein Motorantriebsuntersystem umfasst, das der Hilfsantriebsachse entspricht, wobei das Motorantriebsuntersystem, das der Hilfsantriebsachse entspricht, zwei Unterantriebsmotoren (80; 70; 120; 130) umfasst, und wobei die beiden Unterantriebsmotoren die Antriebskraft über einen Kupplungsmechanismus (170) auf die Hilfsantriebsachse (6) übertragen, um Räder auf beiden Seiten der Achse zum Drehen anzutreiben,
wobei das Motorantriebssystem ferner ein der Hauptantriebsachse (6) entsprechendes Motorantriebsuntersystem umfasst, wobei das der Hauptantriebsachse (6) entsprechende Motorantriebsuntersystem einen Hauptantriebsmotor (3; 60) umfasst, und der Hauptantriebsmotor mechanisch mit dem Hauptkupplungsmechanismus verbunden ist, um die erzeugte Antriebskraft über den Hauptkupplungsmechanismus auf die Hauptantriebsachse des Fahrzeugs zu übertragen und
wobei es sich bei dem Hauptantriebsmotor (3; 60) und dem Generator (30; 202) um zwei separate Komponenten handelt.

2. Hybridkraftantriebssystem nach Anspruch 1, wobei eine mechanische Verbindung zwischen dem Reichweitenverlängerungssystem (2) und dem Hauptkupplungsmechanismus (4; 21) umfasst, dass der Generator (30; 202) über eine Schaltkupplung (20) mechanisch mit dem Hauptkupplungsmechanismus verbunden ist, um die von dem Motor (50) und/oder dem Generator erzeugte Antriebskraft unter der Steuerung der Fahrzeugsteuereinheit auf den Hauptkupplungsmechanismus zu übertragen.

3. Hybridkraftantriebssystem nach Anspruch 2, wobei der Motor (50; 201) und der Generator (30; 202) des Reichweitenverlängerungssystems (2) über eine Schaltkupplung (40) verbunden sind, so dass der Motor und der Generator unter der Steuerung der Fahrzeugsteuereinheit getrennt werden können.

4. Hybridkraftantriebssystem nach Anspruch 1, wobei eine mechanische Verbindung zwischen dem Reichweitenverlängerungssystem (2) und dem Hauptkupplungsmechanismus (4; 21) umfasst, dass der Motor (50; 201) über eine Schaltkupplung (20) mechanisch mit dem Hauptkupplungsmechanismus verbunden ist, um die von dem Motor erzeugte Antriebskraft unter der Steuerung der Fahrzeugsteuereinheit auf den Hauptkupplungsmechanismus zu übertragen.

5. Hybridkraftantriebssystem nach einem der Ansprüche 1 bis 4, wobei die Fahrzeugsteuereinheit konfiguriert ist, um gemäß einer vorbestimmten Steuerstrategie das Hybridkraftantriebssystem so zu steuern, dass es sich in verschiedenen Betriebsmodi befindet, wobei die Betriebsmodi umfassen: einen reinen Elektromodus, einen Antriebsmodus mit verlängerter Reichweite, einen Motorantriebsmodus, einen Hybridantriebsmodus, einen In-Situ-Stromerzeugungsmodus und einen Energierückgewinnungsmodus.

6. Hybridkraftantriebssystem nach den Ansprüchen 3 und 5,
wobei sich das Hybridkraftantriebssystem im reinen Elektromodus befindet, und unter der Steuerung der Fahrzeugsteuereinheit,
wenn der Leistungsbedarf des Fahrzeugs gering ist, die Leistungsbatterievorrichtung (1; 110)den Strom an das Motorantriebssystem (3) liefert; und
wenn der Leistungsbedarf des Fahrzeugs groß ist, der Generator (30; 202) so gesteuert wird, dass er als Antriebsmotor arbeitet, und der Generator vom Motor getrennt wird; und die Leistungsbatterievorrichtung den Strom an das Motorantriebssystem und/oder den Generator liefert.

7. Hybridkraftantriebssystem nach Anspruch 5, wobei sich das Hybridkraftantriebssystem im Antriebsmodus mit verlängerter Reichweite befindet, und unter der Steuerung der Fahrzeugsteuereinheit,
der Generator (30; 202) unter dem Antrieb des Motors (50; 201) Energie erzeugt, um das Motorantriebssystem (3) mit Strom zu versorgen und/oder die Leistungsbatterievorrichtung (1; 110) zu laden.

8. Hybridkraftantriebssystem nach Anspruch 5, wobei sich das Hybridkraftantriebssystem im Motorantriebsmodus befindet, und unter der Steuerung der Fahrzeugsteuereinheit,
wenn der Generator (30; 202) mechanisch über eine Schaltkupplung (20) mit dem Hauptkupplungsmechanismus (4; 21) verbunden ist, der Generator weder antreibt noch Strom erzeugt, sondern nur im Leerlauf dem Motor (50; 201) nachläuft.

9. Hybridkraftantriebssystem nach Anspruch 5, wobei sich das Hybridkraftantriebssystem im Hybridantriebsmodus befindet, und unter der Steuerung der Fahrzeugsteuereinheit,
der Motor (50; 201) und das Motorantriebssystem (3) gemeinsam die Räder zum Drehen antreiben.

10. Hybridkraftantriebssystem nach Anspruch 5, wobei sich das Hybridkraftantriebssystem im Energierückgewinnungsmodus befindet, und unter der Steuerung der Fahrzeugsteuereinheit,
eine Leerlaufrückführkraft oder eine Bremsrückführkraft des Fahrzeugs über einen Kupplungsmechanismus auf einen Antriebsmotor des Motorantriebssystems (3) durch einen Übertragungsmechanismus (10; 90; 100; 140; 150) übertragen wird, der Antriebsmotor als Generator arbeitet und erzeugte elektrische Energie die Leistungsbatterievorrichtung (1; 110) lädt oder elektrische Verbraucher des Fahrzeugs mit Strom versorgt.

11. Hybridkraftantriebssystem nach Anspruch 2 wobei sich das Hybridkraftantriebssystem im In-Situ-Stromerzeugungsmodus befindet, und unter der Steuerung der Fahrzeugsteuereinheit,
wenn die Leistungsbatterievorrichtung (1; 110) wenig Strom hat und das Fahrzeug steht, der Motor (50; 201) den Generator (30; 202) antreibt, um die Leistungsbatterievorrichtung zu laden.

12. Fahrzeug, umfassend das Hybridkraftantriebssystem nach einem der Ansprüche 1 bis 11.

13. Fahrzeug nach Anspruch 12, wobei es sich bei dem Fahrzeug um ein Nutzfahrzeug mit mehreren Antriebsachsen handelt.

## Revendications

1. Système d'entraînement de puissance hybride, comportant un dispositif de batterie d'alimentation (1 ; 110), un système de prolongateur d'autonomie (2), et un système d'entraînement motorisé (3), dans lequel le dispositif de batterie d'alimentation est configuré pour alimenter en puissance le système d'entraînement motorisé, le système de prolongateur d'autonomie comporte un moteur (50 ; 201) et un générateur (30 ; 202), et le générateur est capable de générer une puissance sous l'entraînement du moteur afin d'alimenter en puissance le système d'entraînement motorisé et/ou de charger le dispositif de batterie d'alimentation ; et le système d'entraînement de puissance hybride comporte en outre :
une unité de commande de véhicule, configurée pour commander le moteur et/ou le générateur du système de prolongateur d'autonomie afin de générer une force d'entraînement,
dans lequel le système de prolongateur d'autonomie est relié mécaniquement à un mécanisme de couplage principal (4 ; 21) pour transmettre la force d'entraînement générée à un essieu d'entraînement principal (5) d'un véhicule à l'aide du mécanisme de couplage principal, afin d'entraîner en rotation des roues des deux côtés de l'essieu, dans lequel le véhicule comporte en outre un ou plusieurs essieux d'entraînement auxiliaires (6), dans lequel le système d'entraînement motorisé comporte un sous-système d'entraînement motorisé (7) correspondant à au moins un essieu parmi l'essieu d'entraînement principal et les essieux d'entraînement auxiliaires, et le sous-système d'entraînement motorisé est configuré pour transmettre la force d'entraînement générée à l'essieu d'entraînement correspondant,
dans lequel le système d'entraînement motorisé comporte un sous-système d'entraînement motorisé correspondant à l'essieu d'entraînement auxiliaire, le sous-système d'entraînement motorisé correspondant à l'essieu d'entraînement auxiliaire comporte deux moteurs de sous-entraînement (80 ; 70 ; 120 ; 130), et les deux moteurs de sous-entraînement transmettent la force d'entraînement à l'essieu d'entraînement auxiliaire (6) par le biais d'un mécanisme de couplage (170) afin d'entraîner en rotation des roues des deux côtés de l'essieu,
dans lequel le système d'entraînement motorisé comporte en outre un sous-système d'entraînement motorisé correspondant à l'essieu d'entraînement principal (6), le sous-système d'entraînement motorisé correspondant à l'essieu d'entraînement principal (6) comporte un moteur d'entraînement principal (3 ; 60), et le moteur d'entraînement principal est relié mécaniquement au mécanisme de couplage principal pour transmettre la force d'entraînement générée à l'essieu d'entraînement principal du véhicule par l'intermédiaire du mécanisme de couplage principal et
dans lequel le moteur d'entraînement principal (3 ; 60) et le générateur (30 ; 202) sont deux composants séparés.

2. Système d'entraînement de puissance hybride selon la revendication 1, dans lequel une liaison mécanique entre le système de prolongateur d'autonomie (2) et le mécanisme de couplage principal (4 ; 21) comporte le fait que le générateur (30 ; 202) est relié mécaniquement au mécanisme de couplage principal par le biais d'un embrayage (20) pour transmettre la force d'entraînement générée par le moteur (50) et/ou le générateur au mécanisme de couplage principal sous la commande de l'unité de commande de véhicule.

3. Système d'entraînement de puissance hybride selon la revendication 2, dans lequel le moteur (50 ; 201) et le générateur (30 ; 202) du système de prolongateur d'autonomie (2) sont reliés par le biais d'un embrayage (40), de sorte que le moteur et le générateur peuvent être déconnectés sous la commande de l'unité de commande de véhicule.

4. Système d'entraînement de puissance hybride selon la revendication 1, dans lequel une liaison mécanique entre le système de prolongateur d'autonomie (2) et le mécanisme de couplage principal (4 ; 21) comporte le fait que le moteur (50 ; 201) est relié mécaniquement au mécanisme de couplage principal par le biais d'un embrayage (20) pour transmettre la force d'entraînement générée par le moteur au mécanisme de couplage principal sous la commande de l'unité de commande de véhicule.

5. Système d'entraînement de puissance hybride selon une quelconque des revendications 1 à 4, dans lequel l'unité de commande de véhicule est configurée pour commander, selon une stratégie de commande prédéterminée, le système d'entraînement de puissance hybride pour être dans des modes de fonctionnement différents, dans lequel les modes de fonctionnement comportent : un mode purement électrique, un mode d'entraînement avec prolongation d'autonomie, un mode d'entraînement avec moteur, un mode d'entraînement hybride, un mode de génération de puissance *in situ* et un mode de récupération d'énergie.

6. Système d'entraînement de puissance hybride selon les revendications 3 et 5,
dans lequel le système d'entraînement de puissance hybride est dans le mode purement électrique et sous la commande de l'unité de commande de véhicule,
lorsque la demande de puissance du véhicule est faible, le dispositif de batterie d'alimentation (1 ; 110)alimente en puissance le système d'entraînement motorisé (3) ; et
lorsque la demande de puissance du véhicule est importante, le générateur (30 ; 202) est commandé pour fonctionner comme un moteur d'entraînement, et le générateur est déconnecté du moteur ; et le dispositif de batterie d'alimentation alimente en puissance le système d'entraînement motorisé et/ou le générateur.

7. Système d'entraînement de puissance hybride selon la revendication 5, dans lequel le système d'entraînement de puissance hybride est dans le mode d'entraînement avec prolongation d'autonomie et sous la commande de l'unité de commande de véhicule,
le générateur (30 ; 202) génère une puissance sous l'entraînement du moteur (50 ; 201) afin d'alimenter en puissance le système d'entraînement motorisé (3), et/ou de charger le dispositif de batterie d'alimentation (1 ; 110).

8. Système d'entraînement de puissance hybride selon la revendication 5, dans lequel le système d'entraînement de puissance hybride est dans le mode d'entraînement à moteur et sous la commande de l'unité de commande de véhicule,
si le générateur (30 ; 202) est relié mécaniquement au mécanisme de couplage principal (4 ; 21) par le biais d'un embrayage (20), le générateur n'entraîne ni ne génère aucune puissance, mais seulement tourne au ralenti en fonction du moteur (50 ; 201).

9. Système d'entraînement de puissance hybride selon la revendication 5, dans lequel le système d'entraînement de puissance hybride est dans le mode d'entraînement hybride et sous la commande de l'unité de commande de véhicule,
le moteur (50 ; 201) et le système d'entraînement motorisé (3) entraînent conjointement les roues en rotation.

10. Système d'entraînement de puissance hybride selon la revendication 5, dans lequel le système d'entraînement de puissance hybride est dans le mode de récupération d'énergie et sous la commande de l'unité de commande de véhicule,
une force de réaction au débrayé ou une force de réaction au frein du véhicule est transmise par le biais d'un mécanisme de couplage à un moteur d'entraînement du système d'entraînement motorisé (3) par l'intermédiaire d'un mécanisme de transmission (10 ; 90 ; 100 ; 140 ; 150), le moteur d'entraînement fonctionne comme un générateur et l'énergie électrique générée charge le dispositif de batterie d'alimentation (1 ; 110) ou alimente en puissance des charges électriques du véhicule.

11. Système d'entraînement de puissance hybride selon la revendication 2 ou 3 et selon la revendication 5, dans lequel le système d'entraînement de puissance hybride est dans le mode de génération de puissance *in situ* et sous la commande de l'unité de commande de véhicule,
lorsque le dispositif de batterie d'alimentation (1 ; 110) a une puissance faible et le véhicule est dans un état stationnaire, le moteur (50 ; 201) entraîne le générateur (30 ; 202) afin de charger le dispositif de batterie d'alimentation.

12. Véhicule, comportant le système d'entraînement de puissance hybride selon une quelconque des revendications 1 à 11.

13. Véhicule selon la revendication 12, dans lequel le véhicule est un véhicule commercial à essieux à entraînements multiples.
